# EUROPEAN PATENT SPECIFICATION

(11) **EP 4 249 292 B1**
(45) Date of publication and mention of the grant of the patent: **23.09.2026**
(21) Application number: 23162777.9
(22) Date of filing: 20.03.2023
(51) Int. Cl.: B60C 15/06, B60C 15/00

(54) **PNEUMATIC TIRE**
LUFTREIFEN
PNEUMATIQUE

(30) Priority: 22.03.2022 KR 20220035626
(43) Date of publication of application: 27.09.2023
(73) Proprietor: Kumho Tire Co., Inc., Gwangju 62392 (KR)
(72) Inventor: KIM, Woo-young, 62392 Gwangju (KR); PARK, Byung Chul, 62392 Gwangju (KR)
(74) Representative: BCKIP Part mbB

(56) References cited:
- EP-A1- 2 796 300
- JP-A- 2011 105 076
- US-A1- 2016 082 786

## Description

### TECHNICAL FIELD

The present invention relates to a pneumatic tire.

### BACKGROUND

In general, a vehicle can drive through pneumatic tires that rotate while being in contact with the road surface. The pneumatic tire includes a tread which contacts the road surface, a carcass which forms the skeleton of the tire, a belt capable of dispersing impact applied from the road surface, and a bead which provides a part where the pneumatic tire is coupled to a rim.

In addition, the pneumatic tires have various sizes and shapes, and may be classified into PCR tires (passenger car radial tires) and TBR tires (truck bus radial tires) according to the types of vehicles in which the tires are used.

Meanwhile, the carcass serves as the skeleton of the pneumatic tire, and different types of carcasses are used according to the required performances of the tires. In particular, conventionally, a fabric carcass has been mainly used in the PCR tires, and a steel carcass has been mainly used in the TBR tires to withstand high weight.

However, in recent years, the steel carcass is also used in the PCR tires to withstand high weight and high torque. When the steel carcass is applied to a PCR tire, there may occur a phenomenon in which in a turn-up process of raising the carcass through beads, the turn-up is loosened. In addition, when a separate member for maintaining the turn-up of the carcass is provided, there is a problem in that the rolling resistance performance of the tire is deteriorated and the tire weight is increased.

Accordingly, there is a demand to provide a pneumatic tire that can reduce the rolling resistance of the tire and reduce the weight of the tire while maintaining the turn-up of the steel carcass without a separate member to improve the durability and running performance of the pneumatic tire
EP 2 796 300 A1 discloses a tire that includes a tread, a pair of sidewalls that extends almost inward, in a radial direction, from ends of the tread, a pair of beads positioned almost inward of the sidewalls in the radial direction, and a clinch portion that extends from the sidewalls to the beads, wherein a concave curved surface extends on an outer surface of the clinch portion in a circumferential direction, and a convex curved surface formed on an outer side end, in the radial direction, of a rim flange is engageable with the concave curved surface, a ratio R1/R of a radius of curvatureof the concave curved surface to a radius of curvature R of the convex curved surface of the rim flange satisfies 0.7 ≤ R1/R ≤ 2.5 and the radius of curvature of the concave curved surface and the radius of curvature R of the convex curved surface are each a radius of curvature of an arc on a cross section as taken along a plane including a center axis of the tire.

JP 2011-105076 A addresses the problem of how to restrain molding failure, while maintaining bead durability. As solution, a pneumatic tire is suggested for a heavy load. An inner liner composed of an air impermeable rubber material is attached to the inside of a body part of a carcass ply. The inner end in the tire radial direction of the inner liner extends up to a bead part. An inner sidewall rubber layer extending in the tire radial direction is arranged outside in the tire axial direction of a folding-back part and inside in the tire axial direction of clinch rubber forming a bead outside surface. The inner end in the tire radial direction of the inner sidewall rubber layer is not connected to the inner liner and terminates outside in the tire axal direction more than the inner end of the inner liner. A separate distance between the inner end of the inner sidewall rubber layer and the inner end of the inner liner is 0.3-2.0 times of a maximum width of a bead core.

US 2016/082786 A1 discloses a pneumatic tire that includes a carcass ply wound up from an inner side to an outer side around bead cores, chafers wound up from an outer side to an inner side around the bead cores, and an inner liner rubber which is arranged in an inner side of the carcass ply, wherein a squeegee rubber having a higher modulus than the inner liner rubber is provided closer to the inner liner rubber side than the chafers between the carcass ply and the inner liner rubber, and the squeegee rubber is arranged so as to cover inside wound-up ends of the chafers, and is provided with a thick portion which is thicker than the inner liner rubber, and thin portions which are arranged respectively in an inner side and an outer side in the tire diametrical direction of the thick portion and are thinner than the inner liner rubber.

### SUMMARY

In view of the above, the object of the present invention is to provide a pneumatic tire that improves durability and running performance of the pneumatic tire by maintaining the turn-up of a steel carcass without a separate member. The pneumatic tire should also have a reduced rolling resistance and a reduced weight. This object is solved by the attached independent claims and further embodiments and improvements of the invention are listed in the attached dependent claims.

The present invention relates to a pneumatic tire as defined in claim 1.

The first carcass end portion may be disposed at a position to satisfy following Equation 1: (3/5 x A) ≤ B ≤ (1/2 x C), where A is a distance between both ends of the bead core in the radial direction, B is a distance from the one end of the apex connected to the bead core to an end of the first carcass end portion in the radial direction, and C is a distance between both ends of the apex in the radial direction.

The pneumatic tire may have a cross-sectional width of 205 mm to 275 mm and an aspect ratio of 40% to 55%.

According to the present invention, the durability and running performance of the pneumatic tire can be improved by maintaining the turn-up of the steel carcass without a separate member. Moreover, according to the invention, the rolling resistance of the tire can be reduced, and the weight of the tire can be reduced.

### BRIEF DESCRIPTION OF THE DRAWINGS

FIG. 1 is a cross-sectional view showing a pneumatic tire according to one embodiment of the present invention as claimed.
FIG. 2 is a partially enlarged view of FIG. 1.
FIG. 3 is a partially enlarged view of FIG. 1.
FIG. 4 is a diagram showing analysis results of Example of the present invention as claimed and Comparative Examples 2, 4 and 5.
FIG. 5 is a view showing the results of strain energy analysis at the end of the carcass of Example of the present invention as claimed and Comparative Examples 2, 4 and 5.

### DETAILED DESCRIPTION

Hereinafter, a configuration and operation according to an embodiment of the present invention will be described in detail with reference to the accompanying drawings.

Further, in describing the present invention, detailed descriptions of known configurations or functions may be omitted to clarify the present invention.

When an element is referred to as being 'connected' to another element, it should be understood that the element may be directly connected to or transferred to the other element, but that other elements may exist in the middle.

The terms used in the present disclosure are only used for describing specific embodiments, and are not intended to limit the present disclosure. Singular expressions include plural expressions unless the context clearly indicates otherwise.

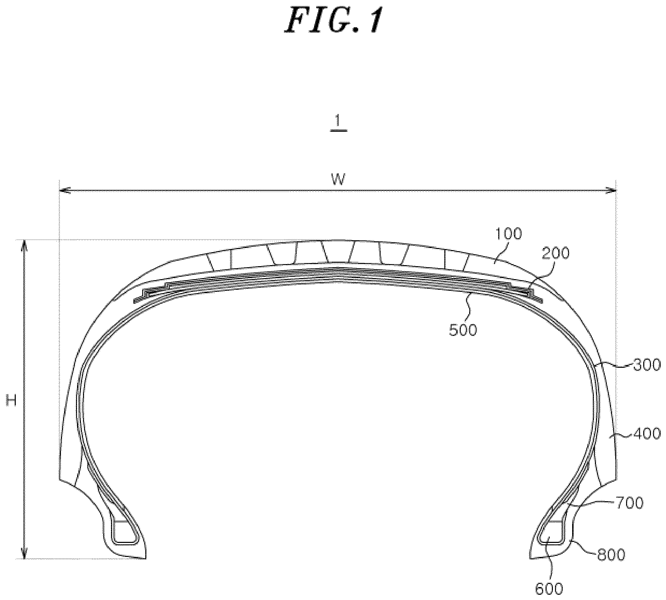

In the present specification, it is to be understood that the terms such as "including" are intended to indicate the existence of the certain features, areas, integers, steps, actions, elements, combinations, and/or groups thereof disclosed in the specification, and are not intended to preclude the possibility that one or more other certain features, areas, integers, steps, actions, elements, combinations, and/or groups thereof may exist or may be added. The 'radial direction' described below refers to the radial direction of the tire and the up-down direction in FIG. 1, and the 'axial direction' refers to a direction perpendicular to the radial direction and parallel to the rotational axis of the tire, and the left and right direction in FIG. 1. Accordingly, in FIG. 1, the outer side in the radial direction means the upper side, the inner side in the radial direction means the lower side, the outer side in the axial direction means the right side, and the inner side in the axial direction means the left side. Meanwhile, unless otherwise specified, the directions include both positive and negative directions. In addition, 'width' means a width in the axial direction, and 'height' means a height in the radial direction.

Hereinafter, a specific configuration of a pneumatic tire 1 according to one embodiment of the present invention as claimed will be described with reference to the drawings.

Referring to FIG. 1, the pneumatic tire 1 according to one embodiment of the present invention as claimed may be mounted to a vehicle and may contact the ground. The pneumatic tire 1 may have different cross-sectional widths W, aspect ratios, and tire diameters depending on the type. For example, the pneumatic tire 1 may have a cross-sectional width W of 205 mm to 275 mm inclusive. In this specification, the cross-sectional width W of the pneumatic tire 1 means the distance from one side to the other side in the axial direction.

In addition, the pneumatic tire 1 may have an aspect ratio of 40% to 55% inclusive. In this specification, the aspect ratio of the pneumatic tire 1 may be defined as (cross-sectional height H)/(cross-sectional width W) x 100%. Further, the pneumatic tire 1 may have a diameter of 16 to 20 inches inclusive.

Meanwhile, the pneumatic tire 1 may include a tread 100, a belt 200, a carcass 300, a sidewall 400, an inner liner 500, a bead core 600, an apex 700, and a rim flange coupling part 800.

The tread 100 is disposed on the outermost side of the pneumatic tire 1 and may be in direct contact with the ground. A plurality of grooves may be provided on an outer circumferential surface of the tread 100 to adjust driving force, braking force or turning force of the pneumatic tire 1. In addition, the grooves may be provided to be depressed by a predetermined depth from the outer circumferential surface of the tread 100. The grooves may have shapes of various patterns suitable for the use of the pneumatic tire 1.

The belt 200 is disposed between the tread 100 and the carcass 300 and can disperse an impact applied to the tread 100 from the outside. The belt 200 may be located at an inner side of the tread 100 in the radial direction and an outer side of the carcass 300 in the radial direction. In addition, the belt 200 may be formed of one or two layers. For example, when the belt 200 is formed of two layers, the two layers may be stacked one on another in the radial direction.

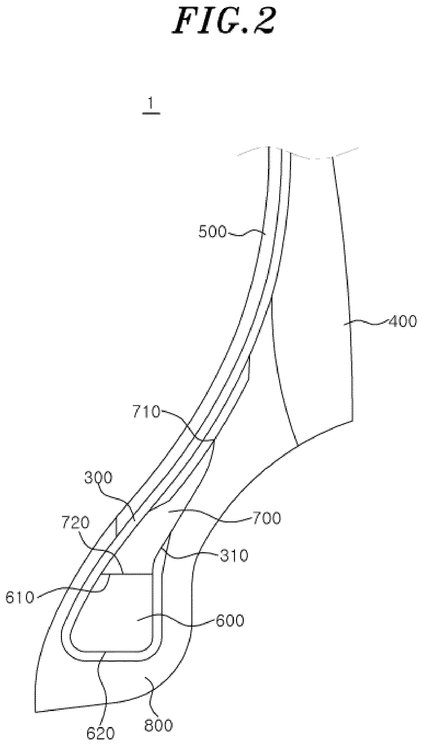

Referring to FIG. 2, the carcass 300 may be provided to form a skeleton of the pneumatic tire 1. The carcass 300 indicates a cord layer inside the pneumatic tire 1, and since the carcass 300 serves to support a load and absorb shock, it may be formed of a material that is resistant to fatigue against flexion and extension movements. According to the present invention, the carcass 300 includes a plurality of steel cords. Since the steel cord has a high modulus and a low change in physical properties due to heat and moisture, the rolling resistance of the pneumatic tire 1 can be reduced. In addition, the steel cord included in the carcass 300 has a diameter of 0.09 mm to 0.15 mm inclusive. Moreover, the steel cord has a cutting force of 25 kgf to 86 kgf inclusive.

Meanwhile, the carcass 300 may be located at an inner side of the belt 200 in the radial direction and an outer side of the inner liner 500 in the radial direction. The carcass 300 may form one layer. Here, the carcass 300 forming one layer means that the carcass 300 is formed of one layer rather than a plurality of layers separated in the radial direction. In addition, the carcass 300 may be turned up to surround the bead core 600 and the apex 700. In this specification, turning up of the carcass 300 means that the carcass 300 extending toward the inner side in the radial direction is bent and extended toward the outer side in the radial direction to surround the bead core 600 and the apex 700. In this case, the carcass 300 may be extended in a 'u' shape to surround the bead core 600 and the apex 700. The carcass 300 may have a first carcass end portion 310.

The first carcass end portion 310 may be one end portion of the carcass 300 located on the side of the bead core 600 and the apex 700. The first carcass end portion 310 may be interposed between the bead core 600 and the rim flange coupling part 800 to surround the bead core 600. In addition, the first carcass end portion 310 may be disposed between the apex 700 and the rim flange coupling part 800 to surround a portion of the apex 700. In this case, a portion of the apex 700 may contact the rim flange coupling part 800. Further, the first carcass end portion 310 may have a thickness which becomes thinner from the inner side in the radial direction to the outer side in the radial direction. In other words, in FIG. 2, the thickness of the first carcass end portion 310 may become thinner from the lower side to the upper side.

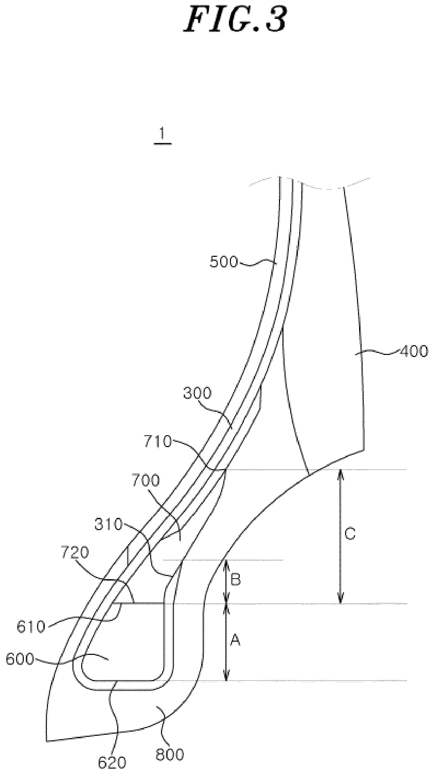

Referring to FIG. 3, the first carcass end portion 310 may be disposed closer to a second apex end 720 than a first apex end 710 of the apex 700. For example, the first carcass end portion 310 may be disposed at a position to satisfy Equation 1 below. $\left(3/5 x A\right) \leq B \leq \left(1/2 x C\right)$

In Equation 1, A indicates a distance between both ends of the bead core 600 in the radial direction. In other words, A in Equation 1 indicates a distance between a first end of bead core 610 and a second end of bead core 620 to be described later in the radial direction as shown in FIG. 3. Further, in Equation 1, B indicates a distance from the second apex end 720 to an end of the first carcass end portion 310 in the radial direction. Furthermore, in Equation 1, C indicates a distance between both ends of the apex 700 in the radial direction. In other words, C in Equation 1 indicates a distance between the first apex end 710 and the second apex end 720 in the radial direction as shown in FIG. 3.

The sidewall 400 may be provided on both sides along the axial direction of the pneumatic tire 1 with respect to the tread 100 to protect the side surfaces of the tire. The outer side of the sidewall 400 in the radial direction is connected to the tread 100, and the inner side of the sidewall 400 in the radial direction may be formed to surround the bead core 600. The sidewall 400 may be made of a cross-linked rubber having excellent light resistance.

The inner liner 500 may be provided to maintain the pressure of air filled inside the pneumatic tire 1. In other words, the inner liner 500 may prevent the air in the pneumatic tire 1 from leaking out. The inner liner 500 may be disposed at the innermost side of the pneumatic tire 1 and may be made of an impermeable material. For example, the inner liner 500 may be made of butyl rubber of high-density, or the like.

The bead core 600 may provide rigidity for fixing the pneumatic tire 1 to a rim (not shown). The bead core 600 may include one or more wires, cords, cores, and the like. For example, the bead core 600 may be formed of a bundle of steel wires. The bead core 600 may have the first end of bead core 610 and the second end of bead core 620.

The first end of bead core 610 is one of both ends of the bead core 600 in the radial direction connected to the apex 700. In addition, the second end of bead core 620 is the other one of both ends of the bead core 600 in the radial direction spaced apart from the apex 700.

The apex 700 may support the rigidity of the bead core 600 itself, and absorb impact. The apex 700 may enhance riding comfort and steering stability by absorbing impact applied to the bead core 600 while a vehicle drives. Further, the apex 700 may be located at an outer side of the bead core 600 in the radial direction. A part of a peripheral portion of the apex 700 may be covered by the carcass 300. Meanwhile, the apex 700 may include the first apex end 710 and the second apex end 720.

The first apex end 710 is one of both ends of the apex 700 in the radial direction spaced apart from the bead core 600. In other words, the first apex end 710 is one radial end of the apex 700, which is spaced apart from the first end of bead core 610.

The second apex end 720 is one of both ends of the apex 700 in the radial direction connected to the bead core 600. In other words, the second apex end 720 is other radial end of the apex 70, which is connected to the first end of bead core 610.

A distance between the first apex end 710 and the second apex end 720 in the radial direction may be greater than 5 mm and less than 45 mm.

The rim flange coupling part 800 may provide a portion where the pneumatic tire 1 is coupled to the rim. In addition, the rim flange coupling part 800 can prevent the pneumatic tire 1 from coming off the rim.

As described above, the pneumatic tire 1 according to one embodiment of the present invention as claimed can maintain the turn-up position of the carcass 300 while using the steel cord by adjusting the end position of the carcass 300.

Moreover, the pneumatic tire 1 according to one embodiment of the present invention as claimed can reduce the weight of the pneumatic tire 1 and the rolling resistance while using the steel cord.

Hereinafter, the effect of the pneumatic tire 1 according to one embodiment of the present invention as claimed described above will be described in detail in comparison with comparative examples.

**(Table 1)**

| Item | | Comparative Example 1 | Comparative Example 2 | Example |
|---|---|---|---|---|
| Carcass | | PET1300D/2P | Steel 2+7*0.095 | Steel 2+7*0.095 |
| Cord cutting force (kgf) | | 20.2 | 25.5 | 25.5 |
| Number of carcass layers | | 2 layers | 1 layer | 1 layer |
| A (mm) | | 8 | 8 | 8 |
| B (mm) | | 7 | 30 | 7 |
| B' (mm) | | 30 | - | - |
| C (mm) | | 15 | 15 | 15 |
| Tire weight (Index) | | 100 | 94 | 92 |
| Rolling resistance (Index) | | 100 | 103 | 110 |
| NVH (Noise dB) | 400 Hz Peak level | 0 | -1.4 | -4.2 |
| | O/A | 0 | -1.0 | -1.5 |
| | Booming | 0 | -0.7 | -0.9 |
| | Cavity noise | 0 | -1.6 | -2.1 |
| | Rumble | 0 | -1.3 | -2.5 |

As shown in Table 1 above, Example of the present invention has an effect of reduced weight, improved rolling resistance performance, and reduced noise compared to Comparative Example 1 in which the carcass includes a fiber cord and two carcass layers. In addition, Example of the present invention has an effect of reduced weight, improved rolling resistance, and reduced noise compared to Comparative Example 2 in which the turn-up of the carcass 300 is formed at an excessively high position and does not satisfy Equation 1. In the above Table 1, 400 Hz Peak level means peak noise in the 400 Hz range, and O/A means overall noise.

**(Table 2)**

| Item | | Comparative Example 1 | Comparative Example 3 | Example |
|---|---|---|---|---|
| Carcass | | PET 1300D/2P | PET 1300D/2P | Steel 2+7*0.095 |
| Number of carcass layers | | 2 layers | 1 layer | 1 layer |
| A (mm) | | 8 | 8 | 8 |
| B (mm) | | 7 | 30 | 7 |
| B' (mm) | | 30 | - | - |
| C (mm) | | 15 | 15 | 15 |
| Tire weight (Index) | | 100 | 87 | 92 |
| Rolling resistance (Index) | | 100 | 109 | 110 |
| Force & Moment (Index) | CC (1°) | 100 | 89 | 103 |
| | ATC (1°) | 100 | 90 | 102 |
| Driving performance sentiment evaluation result (Index) | Ride | 100 | 95 | 101 |
| | Handling | 100 | 92 | 105 |
| | Noise | 100 | 97 | 102 |

As shown in Table 2 above, comparing Comparative Example 1 and Comparative Example 3, when the number of fiber carcass plies is reduced from two to one, weight and rolling resistance are improved, but Force & Moment is reduced due to the decrease in stiffness of the side part. In contrast, in Example of the present invention as claimed, by using a single layer steel carcass, not only the weight and rolling resistance are improved, but also the stiffness of the side part is improved, so that improved driving performance can be obtained.

**(Table 3)**

| Item | | Comparative Example 1 | Comparative Example 2 | Example |
|---|---|---|---|---|
| Carcass | | PET1300D/2P | Steel 2+7*0.095 | Steel 2+7*0.095 |
| Number of carcass layers | | 2 layers | 1 layer | 1 layer |
| A (mm) | | 8 | 8 | 8 |
| B (mm) | | 7 | 30 | 7 |
| B' (mm) | | 30 | - | - |
| C (mm) | | 15 | 15 | 15 |

| Number of evaluation samples | | 90 samples | 90 samples | 90 samples |
|---|---|---|---|---|
| Bad air wrap incidence rate by green case neglect time | 1 day neglect (30 samples) | 0% | 6.6% (2) | 0% |
| | 3 days neglect (30 samples) | 0% | 16.6% (5) | 0% |
| | 5 days neglect (30 samples) | 0% | 23.3% (7) | 3% (1) |

As shown in Table 3 above, when the end of the carcass 300 is turned up to a position higher than the apex 700 as in Comparative Example 2, the defect rate is 13 times higher than the typical tire manufacturing defect rate of 0.5%. It can be confirmed that the defect rate increases as the green case is left alone (neglected) for longer. As such, in Example of the present invention as claimed, the end of the carcass 300 is turned up to satisfy Equation 1, which maintains the same defect rate as the fiber carcass of Comparative Example 1 to secure the manufacturing yield.

**(Table 4)**

| Item | Comparative Example 2 | Comparative Example 4 | Comparative Example 5 | Example |
|---|---|---|---|---|
| Carcass ply | Steel 2+7*0.095 | Steel 2+7*0.095 | Steel 2+7*0.095 | Steel 2+7*0.095 |
| Number of carcass layers | 1 layer | 1 layer | 1 layer | 1 layer |
| A (mm) | 8 | 8 | 8 | 8 |
| B (mm) | 30 | 18 | 0 | 7 |
| C (mm) | 15 | 15 | 15 | 15 |
| Rolling resistance (Index) | 90 | 96 | 100 | 100 |
| Bead load durability (Index) | 100 | 110 | 60 | 120 |
| Speed durability (Index) | 100 | 110 | 100 | 110 |
| Incision analysis after LTDE | Failure | No Failure | Failure | No Failure |
| Strain Energy (Index) | 100 | 90 | 85 | 77 |

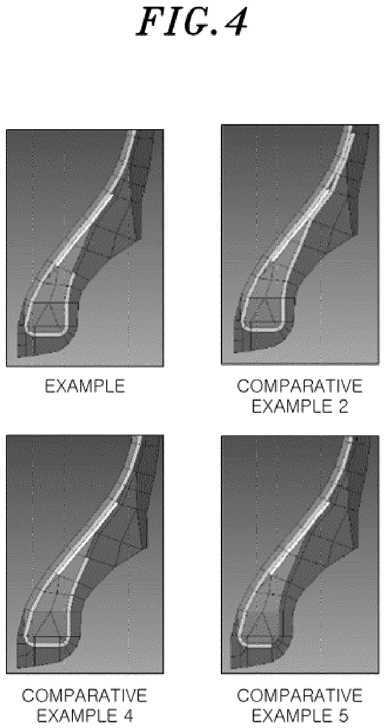

Referring to Table 4 above and FIG. 4, when the carcass 300 was turned up to an excessively high position as in Comparative Example 2, the carcass 300 was damaged as a result of incision analysis after long term durability (LTDE). In addition, as in Comparative Example 4, when the carcass 300 was turned up to a slightly higher position than in Example of the present invention as claimed, the rolling resistance performance was deteriorated, and as in Comparative Example 5, when the carcass 300 was turned up to the bead core 600, the incision analysis after LTDE revealed that the carcass 300 was damaged.

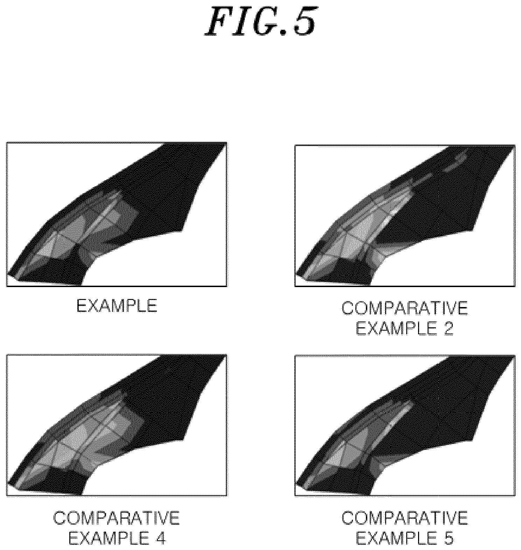

In addition, referring to Table 4 above and FIG. 5, Example of the present invention as claimed has an effect of reducing strain energy at the end of the carcass 300 compared to Comparative Examples 2, 4, and 5.

**(Table 5)**

| Item | Comparative Example 6 | Comparative Example 7 | Comparative Example 8 | Comparative Example 9 | Example |
|---|---|---|---|---|---|
| Carcass ply | 2+7*0.095 | 2+7*0.095 | 2+7*0.095 | 2+7*0.095 | 2+7*0.095 |
| A (mm) | 8 | 8 | 8 | 8 | 8 |
| B (mm) | 2.5 | 5 | 15 | 15 | 7 |
| C (mm) | 5 | 10 | 30 | 45 | 15 |
| Rolling resistance (Index) | 99 | 101 | 98 | 90 | 100 |
| Handling (Index) | 92 | 99 | 103 | 100 | 100 |
| Bead load durability (Index) | 95 | 99 | 98 | 80 | 100 |

Referring to Table 5 above, as in Comparative Example 6, when the length C of the apex 700 in the radial direction is 5 mm, the handling performance is rapidly reduced and the bead load durability is also reduced. In addition, as in Comparative Example 9, when the length C of the apex in the radial direction was 45 mm, the rolling resistance (RR) decreased and the bead durability rapidly decreased. As such, it can be seen that when according to the invention the length C of the apex 700 in the radial direction is greater than 5 mm and less than 45 mm, it is effective in improving rolling resistance performance, improving handling performance, and preventing reduction in bead load durability.

## Claims

1. A pneumatic tire (1) configured to be combined with a rim, the pneumatic tire (1) comprising
a) a bead (600, 700) for preventing the pneumatic tire (1) from coming off the rim, wherein the bead (600, 700) includes a bead core (600) and an apex (700) configured to absorb an impact applied to the bead core (600); and
b) a carcass (300) extending to surround a portion of the apex (700) and including a plurality of steel cords,
c) wherein the carcass (300) includes a first carcass end portion (310) disposed closer to one end (610, 620, 710, 720) of both ends (610, 620, 710, 720) of the apex (700) in a radial direction of the pneumatic tire (1) which is connected to the bead core (600) than the other end of the apex (700) spaced apart from the bead core (600); wherein
d) the apex (700) is configured such that a distance between both ends (610, 620, 710, 720) of the apex (700) in the radial direction is greater than 5 and less than 45 mm,
wherein a diameter of each of the plurality of steel cords ranges from 0.09 mm to 0.15 mm and a cutting force of each of the plurality of steel cords ranges from 25 kgf to 86 kgf.

2. The pneumatic tire of claim 1, wherein the first carcass end portion (310) is disposed at a position to satisfy following Equation 1: $\left(3/5 x A\right) \leq B \leq \left(1/2 x C\right)$ where A is a distance between both ends (610, 620, 710, 720) of the bead core (600) in the radial direction, B is a distance from the one end (610, 620, 710, 720) of the apex (70, 700) connected to the bead core (600) to an end (610, 620, 710, 720) of the first carcass end portion (310) in the radial direction, and C is a distance between both ends (610, 620, 710, 720) of the apex (700) in the radial direction.

3. The pneumatic tire (1) of claims 1 or 2, wherein the pneumatic tire (1) has a cross-sectional width of 205 mm to 275 mm and an aspect ratio of 40% to 55%.

## Patentansprüche

1. Luftreifen (1), der dazu ausgebildet ist, mit einer Felge kombiniert zu werden, wobei der Luftreifen (1) umfasst:
a) einen Wulst (600, 700) zum Verhindern, dass sich der Luftreifen (1) von der Felge löst,
wobei der Wulst (600, 700) einen Wulstkern (600) und einen Kernreiter (700) aufweist, der dazu ausgebildet ist, einen auf den Wulstkern (600) ausgeübten Stoß zu absorbieren; und
b) eine Karkasse (300), welche derart verläuft, dass sie einen Teil des Kernreiters (700) umgibt, und eine Mehrzahl von Stahlkorden aufweist,
c) wobei die Karkasse (300) einen ersten Karkassenendabschnitt (310) aufweist, der in einer Radialrichtung des Luftreifens (1) näher an einem Ende (610, 620, 710, 720) der beiden Enden (610, 620, 710, 720) des Kernreiters (700), das mit dem Wulstkern (600) verbunden ist, angeordnet ist als an dem anderen Ende des Kernreiters (700), das von dem Wulstkern (600) beabstandet ist; wobei
d) der Kernreiter (700) derart ausgebildet ist, dass ein Abstand zwischen den beiden Enden (610, 620, 710, 720) des Kernreiters (700) in der Radialrichtung größer als 5 mm und kleiner als 45 mm ist,
wobei der Durchmesser jedes Stahlkords dieser Mehrzahl im Bereich von 0,09 mm bis 0,15 mm liegt und die Schneidkraft jedes Stahlkords dieser Mehrzahl im Bereich von 25 kgf bis 86 kgf liegt.

2. Luftreifen nach Anspruch 1, wobei der erste Karkassenendabschnitt (310) an einer Position angeordnet ist, sodass die folgende Gleichung 1 erfüllt ist: $\left(3/5 x A\right) \leq B \leq \left(1/2 x C\right)$ wobei A ein Abstand zwischen den beiden Enden (610, 620, 710, 720) des Wulstkerns (600) in der Radialrichtung ist, B ein Abstand von dem einen Ende (610, 620, 710, 720) des Kernreiters (70, 700), das mit dem Wulstkern (600) verbunden ist, zu einem Ende (610, 620, 710, 720) des ersten Karkassenendabschnitts (310) in der Radialrichtung ist, und C ein Abstand zwischen den beiden Enden (610, 620, 710, 720) des Kernreiters (700) in der Radialrichtung ist.

3. Luftreifen (1) nach Anspruch 1 oder 2, wobei der Luftreifen (1) eine Querschnittsbreite von 205 mm bis 275 mm und ein Querschnittsverhältnis von 40 % bis 55 % aufweist.

## Revendications

1. Pneumatique (1), prévu pour être combiné avec une jante, ledit pneumatique (1) comprenant :
a) un talon (600, 700) pour empêcher le pneumatique (1) de se détacher de la jante, ledit talon (600, 700) présentant une tringle (600) et un sommet (700) prévu pour absorber un impact appliqué sur la tringle (600) ; et
b) une carcasse (300) s'étendant de manière à entourer une partie du sommet (700) et présentant une pluralité de câbles en acier,
c) où la carcasse (300) comprend une première partie d'extrémité de carcasse (310) disposée plus près d'une extrémité (610, 620, 710, 720) des deux extrémités (610, 620, 710, 720) du sommet (700) raccordé à la tringle (600) dans une direction radiale du pneumatique (1), que de l'autre extrémité du sommet (700) espacée de la tringle (600) ;
d) le sommet (700) étant prévu de sorte qu'une distance entre les deux extrémités (610, 620, 710, 720) du sommet (700) dans la direction radiale est supérieure à 5 et inférieure à 45 mm, où le diamètre de chaque câble de la pluralité de câbles en acier est compris entre 0,09 mm et 0,15 mm, et une force de coupe de chaque câble de la pluralité de câbles en acier est comprise entre 25 kgf et 86 kgf.

2. Pneumatique selon la revendication 1, où la première partie d'extrémité de carcasse (310) est disposée à un emplacement de manière à satisfaire à l'équation 1 suivante : $\left(3/5 x A\right) \leq B \leq \left(1/2 x C\right)$ où A est la distance entre les deux extrémités (610, 620, 710, 720) de la tringle (600) dans la direction radiale, B la distance depuis la première extrémité (610, 620, 710, 720) du sommet (70, 700) raccordé à la tringle (600) jusqu'à une extrémité (610, 620, 710, 720) de la première partie d'extrémité de carcasse (310) dans la direction radiale, et C la distance entre les deux extrémités (610, 620, 710, 720) du sommet (700) dans la direction radiale.

3. Pneumatique (1) selon la revendication 1 ou la revendication 2, **caractérisé en ce que** ledit pneumatique (1) a une largeur de section transversale comprise entre 205 mm et 275 mm et un rapport d'aspect compris entre 40 % et 55 %.
